# DEMANDE DE BREVET EUROPEEN

(11) **EP 3 246 595 A1**
(43) Date de publication de la demande: **22.11.2017**
(21) Numéro de dépôt: 17165105.2
(22) Date de dépôt: 05.04.2017
(51) Int. Cl.: F16F 15/30

(54) **VOLANT D'INERTIE**

(30) Priorité: 20.05.2016 FR 1654534
(71) Demandeur: PSA Automobiles SA, 78300 Poissy (FR)
(72) Inventeur: DUMOUCHEL, PIERRE EMMANUEL, 92160 ANTONY (FR); GAUTHIER, PIERRE, 92370 CHAVILLE (FR)

(57) **Abrégé**

Ce volant d'inertie comprend une masse annulaire (1) qui lui est concentrique et délimitée par une surface cylindrique périphérique extérieure (3). La masse annulaire (1) est dotée de reliefs (2) irrégulièrement répartis sur la totalité de la surface extérieure (3) et le centre d'inertie du volant est sur son axe de rotation (5).

## Description

L'invention porte sur un volant d'inertie de machines tournantes.

L'invention vise notamment mais pas limitativement, des applications dans le domaine automobile et en particulier les volants d'inertie des moteurs et les volants d'inertie d'accumulation d'énergie des véhicules hybrides.

Dans ce domaine, les bruits engendrés par ces volants d'inertie sont perceptibles par le conducteur et les passagers des véhicules. Ils y a les bruits d'origine mécanique, notamment issus des rotations acycliques des moteurs thermiques, des engrenages, ou des roulements, et les bruits d'origine aéraulique, notamment issus d'un écoulement en régime laminaire de l'air environnant sur des surfaces en mouvement, comme les surfaces des volants d'inertie.

Le document de brevet FR-A-2 849 683 décrit un volant d'inertie flexible pour dispositif de transmission de couple, en particulier pour véhicule automobile, comprenant un élément annulaire radialement interne comportant des moyens de fixation sur un arbre menant et relié par au moins deux bras radiaux diamétralement opposés à une masse annulaire, les bras radiaux définissant un axe d'oscillation du volant perpendiculaire à l'axe de rotation du volant et qui a une position angulaire prédéterminée par rapport à l'arbre menant. La masse annulaire qui entoure la partie radialement interne, a une périphérie cylindrique externe portant des cibles d'allumage. Ces cibles d'allumage sont uniformément réparties sur la périphérie cylindrique.

Un inconvénient d'une telle répartition uniforme est qu'elle ne permet pas de limiter correctement les bruits d'origine aéraulique.

Une autre solution connue de l'homme de l'art consiste à intégrer les volants d'inertie dans un carter insonorisant.

Les inconvénients de cette solution, outre son coût, sont qu'elle est encombrante, lourde, et complexe à assembler ou à désassembler lors des interventions de maintenance ou de réparation.

Le but de l'invention est de remédier aux inconvénients précités.

A cet effet, l'invention a pour objet un volant d'inertie comprenant une masse annulaire qui lui est concentrique et délimitée par une surface cylindrique périphérique extérieure, la masse annulaire étant dotée de reliefs irrégulièrement répartis sur la totalité de la surface extérieure tout en conservant le centre d'inertie du volant sur son axe de rotation.

En effet, cette surface cylindrique périphérique extérieure est génératrice de bruits aérauliques. En particulier lorsque cette surface cylindrique périphérique extérieure est lisse, ou en partie lisse, une instabilité de la couche limite laminaire de l'écoulement du gaz environnant va générer des bruits aérauliques de couche limite. Les reliefs ont pour but de transformer l'écoulement laminaire en un écoulement turbulent, sur toute la surface cylindrique périphérique extérieure, permettant ainsi la suppression de ces bruits aérauliques de couche limite. L'irrégularité de la répartition des reliefs permet de casser des fréquences harmoniques sonores multiples liées à une vitesse de rotation du volant d'inertie, et qui sont à l'origine de bruits également aérauliques et communément appelés bruits de sirène.

Cette répartition irrégulière doit se comprendre dans tout le texte de ce document, comme une concentration des reliefs variable sur toute la surface cylindrique périphérique extérieure.

La conservation du centre d'inertie du volant sur son axe de rotation, permet de garder l'équilibrage dynamique du volant et évite des vibrations mécaniques génératrices de bruits lors de la rotation du volant.

On voit ainsi que cette réalisation permet d'atténuer tous les bruits aérauliques, que ce soit les bruits aérauliques de couche limite ou les bruits aérauliques de sirène.

Selon un mode de réalisation, la masse annulaire est délimitée en outre par deux faces distantes orthogonales à l'axe de rotation du volant, et les reliefs sont irrégulièrement répartis sur au moins une partie des deux faces distantes.

En effet, les deux faces distantes sont susceptibles de générer des bruits aérauliques selon le même principe expliqué précédemment. Il est alors avantageux que ces deux faces distantes soient dotées de ces reliefs.

Selon une variante de l'invention, les reliefs sont des anfractuosités.

En effet, la forme irrégulière des anfractuosités permet de renforcer l'effet de l'irrégularité de la répartition des reliefs.

Selon une variante de réalisation, les reliefs sont des grains irréguliers ou des charges irrégulières mélangés à un revêtement appliqué sur les surfaces du volant d'inertie, le revêtement étant par exemple une peinture ou un liant.

Selon une variante de l'invention, les reliefs sont des cannelures débouchant sur les deux faces et/ou des cannelures débouchant sur la surface cylindrique périphérique extérieure.

Dans tout le texte de ce document, on entend ici par cannelure, toute forme de sillons, rayures, gorges, dentures ou cannelures ayant une forme principalement rectiligne.

Ces cannelures sont simples à réaliser sur un volant d'inertie, et sont un mode de réalisation des reliefs. Les cannelures réparties sur la surface cylindrique périphérique extérieure débouchent sur les deux faces, ce qui permet à la fois de réaliser les reliefs sur toute la surface cylindrique périphérique extérieure, et de les orienter sensiblement parallèles à l'axe de rotation du volant d'inertie. Les cannelures réparties sur les deux faces débouchent sur la surface cylindrique périphérique extérieure. Ces reliefs s'opposent donc à un glissement du gaz environnant, comme de l'air, facilitant ainsi l'apparition de l'écoulement turbulent.

Selon un mode de réalisation, le pas d'une cannelure à l'autre est différent pour toutes les cannelures.

Ce mode de réalisation est un exemple de répartition irrégulière pour les cannelures. Pour les cannelures réparties sur la surface cylindrique périphérique extérieure, le pas est une distance entre deux cannelures successives. Pour les cannelures réparties sur les deux faces, le pas est, par exemple, un pas angulaire entre deux cannelures successives.

Selon une variante de l'invention, les cannelures sont réparties autour de l'axe de rotation du volant, chacune des cannelures étant disposée angulairement autour de l'axe de rotation, par rapport à une position qui serait la sienne si toutes les cannelures étaient disposées de manière uniformément répartie, avec un décalage angulaire respectif pris, pour les cannelures successives, suivant une séquence binaire pseudo-aléatoire.

Cette variante de l'invention permet non seulement de casser des fréquences harmoniques sonores multiples liées à la vitesse de rotation du volant, mais aussi de déplacer ces harmoniques sonores de façon à les confondre avec des bruits environnants habituels, par exemple ceux d'un moteur thermique.

Selon une variante de réalisation, le flanc des cannelures est droit.

Selon une variante de l'invention, le flanc des cannelures est curviligne.

Selon une variante de l'invention, les cannelures sont hélicoïdales.

Selon une variante de l'invention, les cannelures sont sécantes entre elles.

Selon une variante de l'invention, les cannelures sont rapportées sur le volant d'inertie et sont constituées d'une matière différente de celle du volant d'inertie, par exemple en plastique.

Selon une variante de l'invention, les cannelures sont issues d'un procédé d'usinage, de moulage, ou moletage.

Selon un mode de réalisation, la profondeur des cannelures est comprise entre 0,01% et 1% du diamètre le plus grand de la surface cylindrique périphérique extérieure.

Selon un mode de réalisation, le nombre des cannelures est au moins de 50.

L'invention porte également sur un groupe motopropulseur d'un véhicule qui comprend un volant d'inertie tel que précédemment décrit.

L'invention porte également sur un véhicule hybride comprenant un volant d'inertie à accumulation d'énergie qui est un volant d'inertie tel que précédemment décrit.

D'autres caractéristiques, buts et avantages de l'invention apparaîtront à la lecture de la description des exemples de réalisation non limitatifs qui vont suivre, faite en référence aux figures annexées, qui représentent :

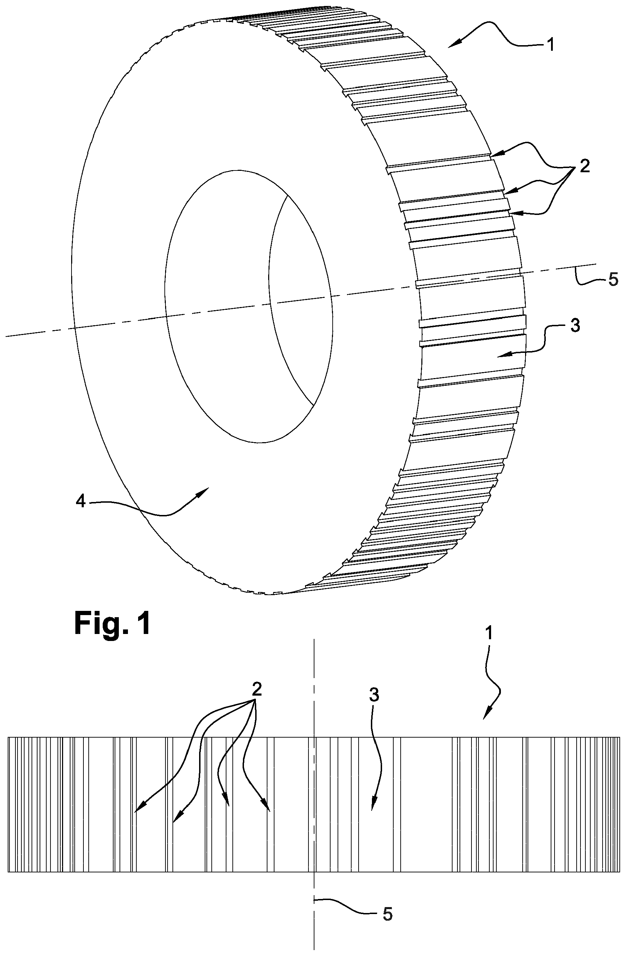

- Figure 1 : un volant d'inertie suivant un mode de réalisation de l'invention.

L'ensemble représenté sur la figure 1 comporte un volant d'inertie comprenant une masse annulaire 1 qui lui est concentrique et délimitée par une surface cylindrique périphérique extérieure 3, la masse annulaire 1 est dotée de reliefs 2 irrégulièrement répartis sur la totalité de la surface extérieure 3, et le centre d'inertie du volant est sur son axe de rotation 5.

Dans une variante de réalisation, non représentée, ces reliefs 2 sont des anfractuosités. Ce sont des reliefs en trois dimensions variables en taille et en forme, par exemple des grains irréguliers ou des charges irrégulières mélangés à un revêtement appliqué sur les surfaces du volant d'inertie. Ce revêtement est par exemple une peinture, une colle ou un liant. Ces anfractuosités peuvent également être des creux façonnés ou usinés dans la matière du volant d'inertie.

Dans un mode de réalisation, non représenté, la masse annulaire 1 est délimitée en outre par deux faces distantes 4 orthogonales à l'axe de rotation 5 du volant, et les reliefs sont irrégulièrement répartis sur au moins une partie des deux faces distantes 4. Une partie privilégiée de ces deux faces distantes 4 est située à proximité de la surface cylindrique périphérique extérieure 3, car c'est dans cette partie privilégiée qu'une vitesse relative entre un gaz, comme de l'air, et le volant d'inertie, est la plus élevée.

Dans cet exemple de la figure 1, ces reliefs 2 sont des cannelures qui peuvent prendre la forme de sillons, rayures, gorges, dentures ou toute forme principalement rectiligne. Les cannelures débouchent sur les deux faces 4. Ces cannelures sont rectilignes et parallèles à l'axe de rotation du volant 5.

Selon une variante de réalisation, non représentée, le pas d'une cannelure à l'autre est différent pour toutes les cannelures. C'est un exemple de répartition irrégulière pour les cannelures. Pour les cannelures réparties sur la surface cylindrique périphérique extérieure 3, le pas est une distance entre deux cannelures successives. Pour les cannelures réparties sur les deux faces 4, le pas est, par exemple, un pas angulaire entre deux cannelures successives. Les cannelures sur la partie privilégiée des deux faces distantes 4 débouchent sur la surface cylindrique périphérique extérieure 3 à une première extrémité, alors que la deuxième extrémité débouche sur la partie privilégiée même.

Dans l'exemple de la figure 1, sont représentés plusieurs groupes de cannelures, chacun des groupes ayant un pas de cannelure constant mais différent d'un groupe à l'autre, chaque groupe étant reproduit au moins deux fois sur la surface cylindrique périphérique extérieure 3. Le pas angulaire entre chaque groupe est différent. Ceci permet de réaliser un exemple de répartition irrégulière des cannelures.

Selon une variante de réalisation, non représentée, les cannelures sont réparties autour de l'axe de rotation 5 du volant, chacune des cannelures étant disposée angulairement autour de l'axe de rotation 5, par rapport à une position qui serait la sienne si toutes lesdites cannelures étaient disposées de manière uniformément répartie, avec un décalage angulaire respectif pris, pour les cannelures successives, suivant une séquence binaire pseudo-aléatoire.

Selon un mode de réalisation représenté sur la figure 1, le flanc des cannelures est droit. C'est le mode de réalisation le plus simple. les cannelures sont issues d'un procédé d'usinage, de moulage, ou moletage. Le procédé par moletage est économiquement préférable : la molette est dotée d'empreintes de cannelures irrégulièrement espacées, et la longueur périphérique de la surface cylindrique périphérique extérieure 3 est un multiple entier de la développée de la molette.

Selon une variante de réalisation non représenté, le flanc des cannelures est curviligne.

Selon une variante de réalisation non représentée, les cannelures sont hélicoïdales.

Selon une variante de l'invention non représentée, les cannelures sont sécantes entre elles.

Selon une variante de l'invention non représentée, les cannelures sont rapportées sur le volant d'inertie et sont constituées d'une matière différente de celle du volant d'inertie, par exemple en plastique.

Selon un mode de réalisation représenté sur la figure 1, la profondeur des cannelures est comprise entre 0,01% et 1% du diamètre le plus grand de la surface cylindrique périphérique extérieure 3. Cette caractéristique est suffisante pour transformer l'écoulement laminaire en un écoulement turbulent, tout en limitant l'impact en termes de coût et d'encombrement de la réalisation de telles cannelures.

Selon un mode de réalisation représenté sur la figure 1, le nombre des cannelures est au moins de 50. Cette caractéristique permet d'avoir une bonne répartition irrégulière des cannelures sur toute la surface cylindrique périphérique extérieure 3, comme sur les deux faces 4. Le nombre maximal de cannelures dépend essentiellement du plus grand diamètre de la surface cylindrique périphérique extérieure 3, et peut aller jusqu'à plusieurs milliers, en particulier lorsqu'elles sont réalisées par moletage.

Ce volant d'inertie est par exemple le volant d'inertie d'un groupe motopropulseur d'un véhicule, plus particulièrement d'un moteur thermique. Il peut alors comporter une couronne de démarreur rapportée sur la surface extérieure 3, par serrage, collage, vissage, ou tout autre moyen de solidarisation.

Selon une variante d'utilisation, ce volant d'inertie est par exemple le volant d'inertie d'un véhicule hybride pour l'accumulation d'énergie mécanique. De tels volants d'inertie tournent sensiblement plus vite que les volants d'inertie des moteurs thermiques, ce qui les rend particulièrement sensibles aux phénomènes de bruits aérauliques. Le volant d'inertie absorbe l'énergie cinétique du véhicule lors de phases de freinage, ou toute autre phase où le véhicule peut produire plus d'énergie que nécessaire pour son déplacement. Cette énergie est alors restituée à une transmission mécanique vers les roues du véhicule lors de phases motrices, ou restituée à un moteur en phase de démarrage.

## Revendications

1. Volant d'inertie, comprenant une masse annulaire (1) qui lui est concentrique et délimitée par une surface cylindrique périphérique extérieure (3), ledit volant étant **caractérisé en ce que** ladite masse annulaire (1) est dotée de reliefs (2) irrégulièrement répartis sur la totalité de ladite surface cylindrique périphérique extérieure (3) et **en ce que** le centre d'inertie dudit volant est sur l'axe de rotation (5) dudit volant.

2. Volant d'inertie selon la revendication 1, ladite masse annulaire (1) étant délimitée en outre par deux faces distantes (4) orthogonales à l'axe de rotation (5) dudit volant, **caractérisé en ce que** les reliefs (2) sont irrégulièrement répartis sur au moins une partie des deux faces distantes (4).

3. Volant d'inertie selon les revendications 1 ou 2, **caractérisé en ce que** les reliefs (2) sont des anfractuosités.

4. Volant d'inertie selon la revendication 1 ou 2, ladite masse annulaire (1) étant délimitée en outre par deux faces distantes (4) orthogonales à l'axe de rotation (5) dudit volant, **caractérisé en ce que** les reliefs (2) sont des cannelures débouchant sur lesdites deux faces (4) et/ou des cannelures débouchant sur ladite surface cylindrique périphérique extérieure (3).

5. Volant d'inertie selon la revendication 4, **caractérisé en ce que** le pas d'une cannelure à l'autre est différent pour toutes lesdites cannelures.

6. Volant d'inertie selon la revendication 4, **caractérisé en ce que** lesdites cannelures sont réparties autour de l'axe de rotation (5) dudit volant, chacune desdites cannelures étant disposée angulairement autour de l'axe de rotation (5), par rapport à une position qui serait la sienne si toutes lesdites cannelures étaient disposées de manière uniformément répartie, avec un décalage angulaire respectif pris, pour lesdites cannelures successives, suivant une séquence binaire pseudo-aléatoire.

7. Volant d'inertie selon l'une des revendications 4 à 6, **caractérisé en ce que** la profondeur desdites cannelures est comprise entre 0,01% et 1% du diamètre le plus grand de ladite surface cylindrique périphérique extérieure (3).

8. Volant d'inertie selon l'une des revendications 4 à 7, **caractérisé en ce que** le nombre desdites cannelures est au moins de 50.

9. Groupe motopropulseur d'un véhicule, **caractérisé en ce qu'**il comprend un volant d'inertie selon l'une quelconque des revendications précédentes.

10. Véhicule hybride comprenant un volant d'inertie à accumulation d'énergie, **caractérisé en ce que** ledit volant d'inertie à accumulation d'énergie est un volant d'inertie selon l'une des revendications 1 à 8.
